Europäisches Patentamt

European Patent Office

Office européen des brevets

(11) Publication number: **0 115 196**
**B1**

(12) **EUROPEAN PATENT SPECIFICATION**

(45) Date of publication of patent specification: **18.03.87**

(21) Application number: **83307941.1**

(22) Date of filing: **23.12.83**

(51) Int. Cl.⁴: **H 04 N 5/18**

(54) Clamp circuit for use in video camera having image pick-up device.

(30) Priority: **29.12.82 JP 234233/82**

(43) Date of publication of application:
**08.08.84 Bulletin 84/32**

(45) Publication of the grant of the patent:
**18.03.87 Bulletin 87/12**

(84) Designated Contracting States:
**DE FR GB NL**

(56) References cited:
**FR-A-2 186 793**
**US-A-4 215 371**

(73) Proprietor: **SONY CORPORATION**
**7-35 Kitashinagawa 6-Chome Shinagawa-ku**
**Tokyo 141 (JP)**

(72) Inventor: **Yoshioka, Osamu**
**18 Shirahataminami-cho Kanagawa-ku**
**Yokohama-shi Kanagawa-ken (JP)**
Inventor: **Kajino, Isao**
**5-7-302, Takamori**
**Isehara-shi Kanagawa-ken (JP)**
Inventor: **Yamanaka, Seisuke**
**20-303, 2-14 Murei**
**Mitaka-shi Tokyo (JP)**

(74) Representative: **Ayers, Martyn Lewis Stanley**
**et al**
**J.A. KEMP & CO. 14 South Square Gray's Inn**
**London, WC1R 5EU (GB)**

Courier Press, Leamington Spa, England.

# Description

This invention relates to a clamp circuit for use in an image pick-up device of a video camera or the like to clamp the black level of the output signal of the image pick-up to a predetermined electric potential and, more particularly, to a clamp circuit, which clamps the optical black level of the output signal of an image pick-up obtained from an image pick-up section with an optical black-detecting portion in the horizontal direction provided in an ineffective picture area corresponding to the horizontal blanking interval for each horizontal scanning interval.

The output signal obtained from an image pick-up device is usually subjected to various signal processes with its black level as a reference. It is well-known in the art that an image pick-up tube or a solid-state image sensor, which is used as the image pick-up section of the image pick-up device, is subjected to dark current fluctuations due to such causes as ambient temperature changes, the dark current fluctuations causing variations of its output signal level.

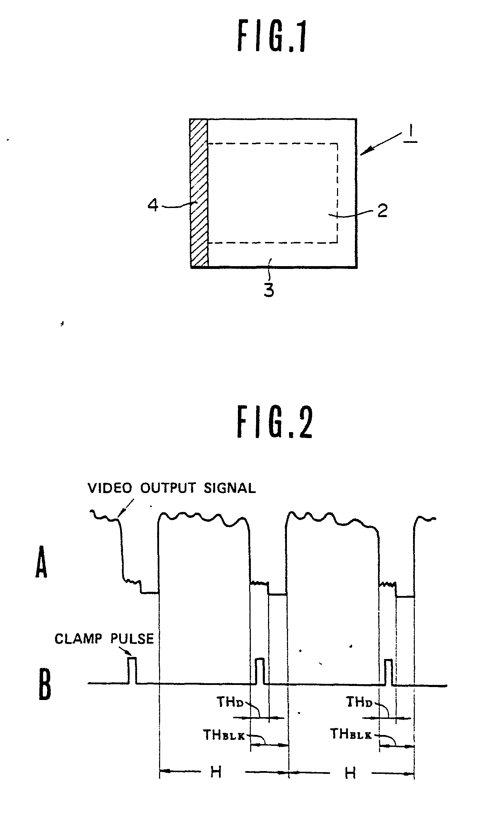

To cope with this drawback, it has been proposed to provide the image pick-up section 1, as shown in Fig. 1, with an optical black-detecting portion 4 at one of its sides which is shielded against light and forms part of an ineffective picture area 3 surrounding an effective picture area 2. This portion 4 corresponds to the horizontal blanking interval of the output signal of the section 1 and is used to clamp the optical black level of the image pick-up output signal to a predetermined electric potential. The output signal of the image pick-up section 1 with said optical black-detecting portion 4, as shown in Fig. 2A, has a signal interval $TH_D$ corresponding to said optical black-detecting portion 4, the signal interval $TH_D$ being within the horizontal blanking interval $TH_{BLK}$ of the horizontal scanning interval H. The signal level of said signal interval $TH_D$ is given by the optical black-detecting portion 4, which is shielded against light. That is, it does not depend on the image pick-up light intensity but is determined by the level of the dark current. Compensation of said optical black level for dark current fluctuations, therefore, can be obtained to maintain a predetermined electric potential by clamping the signal level in said signal interval $TH_D$, i.e. the optical black level, to a predetermined level with a clamp pulse, as shown in Fig. 2B, contained in said signal interval $TH_D$ for every horizontal scanning interval H.

Such a system is described in FR—A—2186793 (Compteurs Schlumberger) where the optical-black level of the video signal is clamped to the constant voltage $V_A$ by a clamping capacitor and a clamp switch which is operated in response to clamp pulses provided by a pulse generator.

In a solid-state image sensor consisting of a CCD (Charge Coupled Device) or the like, a light-receiving section corresponding to the picture elements is provided only for said effective picture area 2 while providing only a transfer register for said ineffective picture area 3 in order to provide as many effective picture elements as possible. The output signal of the image pick-up obtained from the image pick-up section consisting of said solid-state image sensor, thus is subject to the influence of dark current only in the transfer register in its portion corresponding to the ineffective picture area 3, while its portion corresponding to the effective picture area 2 is subject to the influence of dark currents in both the light-receiving section and transfer register section. Particularly, a pronounced level variation occurs due to said dark current between the vertical blanking interval, during which no signal is read out, and the subsequent scanning interval.

Therefore, if the time constant of the clamp circuit is reduced so that it is possible to faithfully follow dark current changes in the solid-state image sensor output signal for each field or frame, low frequency noise components that are generated at the time of clamping are increased and may result in the formation of stripes or otherwise greatly reduce the quality of reproduction of each line. On the other hand, if the time constant of the clamp circuit is increased to reduce said low frequency noise components, sufficient compensation for the level variaton generated between said vertical blanking interval and subsequent scanning interval cannot be obtained, and this may cause flicker on the picture or brightness variations in the vertical direction.

According to the present invention there is provided clamp circuit for use in a video camera having an image pick-up device, said image pick-up device having an optical black-detecting portion provided in an ineffective picture area corresponding to the horizontal blanking interval of the output signal of said image pick-up device, said clamp circuit receiving, in use, said output signal from said image pick-up device, and comprising a clamp switch on-off operated at a horizontal scanning frequency;

a clamp voltage source connected to said clamp switch, a part of said signal corresponding to said optical black-detecting portion being clamped to the voltage supplied by said clamp voltage source; and clamp pulse generating means for generating a train of clamp pulses, having a shorter duration than the signal interval corresponding to the optical black level of the image pick-up outputs for controlling said clamp switch, characterised in that the pulse width of at least one of said clamp pulses supplied immediately after the vertical blanking interval is greater than that of the other clamp pulses.

Other optional features of the invention are defined in the sub claims.

The above and other features of the invention will become apparent from the following detailed description taken in conjunction with the drawings which illustrate an embodiment of the present invention. In the drawings:—

Fig. 1 is a schematic view showing the constitution of an image pick-up section for giving an optical black level to the image pick-up output signal;

Fig. 2 is a waveform chart for explaining the operation of a prior art clamp circuit for clamping the optical black level of the image pick-up output signal;

Fig. 3 is a block diagram showing an embodiment of the clamp circuit according to the present invention applied to an image pick-up device;

Fig. 4 is a waveform chart for explaining the clamping operation of the same embodiment;

Fig. 5 is a schematic view showing a different example of the image pick-up section of image pick-up device, to which the present invention is applied; and

Fig. 6 is a waveform chart for explaining the clamping operation of the clamp circuit according to the present invention with respect to the output signal of the image pick-up section shown in Fig. 5.

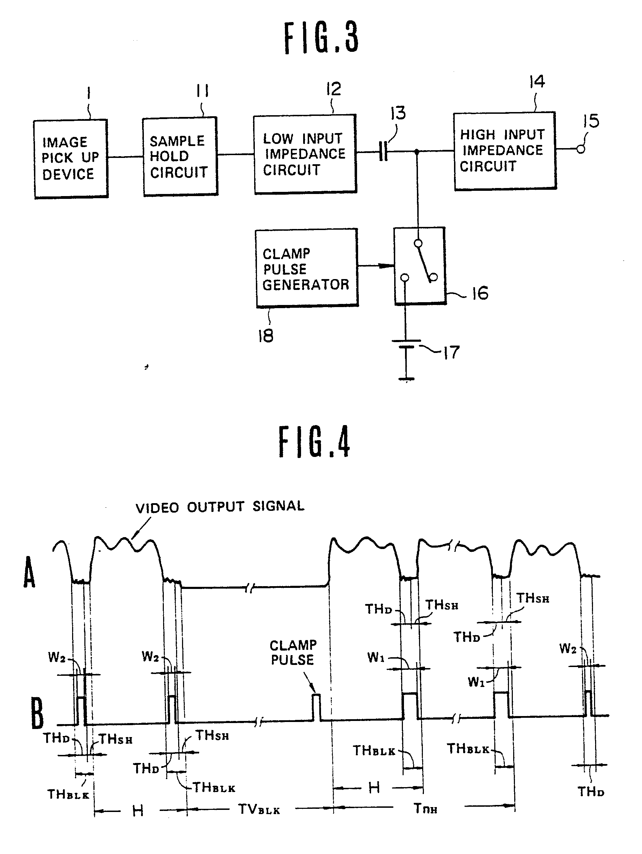

Fig. 3 is a block diagram showing an embodiment of the present invention applied to an image pick-up device.

The image pick-up device of the embodiment has the image pick-up section 1 as shown in Fig. 1, with the optical black-detecting portion 4 in the horizontal direction. The image pick-up section 1 consists of, for instance, an interline transfer type CCD image sensor.

The output signal of the image pick-up obtained from said image pick-up section 1 is supplied to a low impedance circuit 12 through a sample/hold circuit 11.

The sample/hold circuit 11 samples the data level of the output signal of the image pick-up section 1 at the end of the signal interval $TH_D$ corresponding to the optical black detecting portion 4, and holds the sampled level during the interval $TH_{SH}$ until the end of the horizontal blanking interval $TH_{BLK}$. The image pick-up output signal, as shown in Fig. 4A, from the sample/hold circuit 11 is supplied to a high input impedance 14 from said low input impedance circuit 12 through a clamping capacitor 13 and then from an output terminal 15 through said high input impedance circuit 14. The connection point between said clamping capacitor 13 and high input impedance circuit 14 is connected to a voltage source 17 through a clamp switch 16. The clamp switch 16 is on-off controlled for each horizontal scanning interval by a clamp pulse signal supplied from a clamp pulse generator 18 in the manner as described hereinafter.

The clamp pulse generator 18 generates a clamp pulse for each horizontal scanning interval H as shown in Fig. 4B. The clamp switch 16 is held closed while said clamp pulse output is at a high level. The pulse width of the clamp pulses provided for several horizontal scanning intervals $T_{nH}$ immediately after each vertical blanking interval of the image pick-up output has a value $W_1$ greater than the pulse width $W_2$ of the other clamp pulses within the horizontal blanking interval $TH_{BLK}$. The pulse width $W_2$ is provided within the signal interval $TH_D$ corresponding to the optical black level of the image pick-up output signal.

With the embodiment having the construction as described, immediately after the vertical blanking interval $TV_{BLK}$, the output signal of the image pick-up section 1 is clamped by the wider clamp pulses having the pulse width $W_1$ covering the signal interval $TH_D$ corresponding to the optical black level in the horizontal direction and the subsequent signal intervals $TH_{SH}$, during which the data level of the end of said signal interval $TH_D$ is held. That is, the time constant for the clamping action is decreased to permit even a rapid change in the dark current level in said image pick-up section 1 to be faithfully followed. Since the pulse width of said clamp pulses is increased to the value $W_1$ only for several horizontal scanning intervals immediately after the vertical blanking interval $TV_{BLK}$ and is reset to the value $W_2$ for the subsequent pulses, it is possible to obtain accurate clamping fo the signal interval $TH_D$ corresponding only to the optical black level and thus sufficiently suppress the low frequency noise.

The above embodiment of the present invention has been concerned with an image pick-up device with the image pick-up section 1 which has only the optical black-detecting portion 4 in the horizontal direction, but the present invention is by no means limited to such an arrangement.

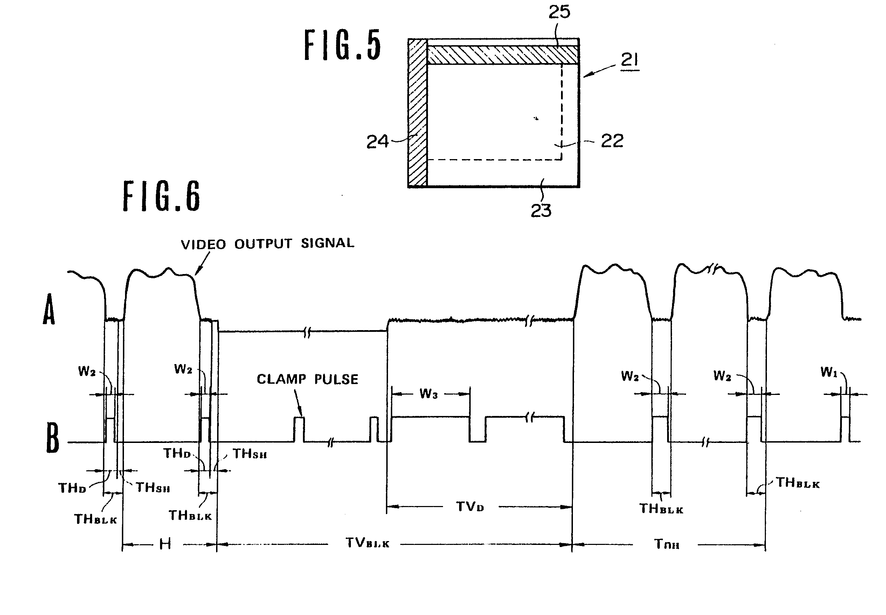

For example, the clamp circuit according to the present invention may be used for clamping the output signal of an image pick-up section 21 as shown in Fig. 5, which has optical black-detecting portions 24 and 25 provided in an ineffective picture area 23 surrounding the ineffective picture area 22 in correspondence to the respective horizontal and vertical blanking intervals of its output signal.

In this case, the pulse width may be set to an increased value $W_3$, as shown in Fig. 6B, within the signal interval $TH_D$ corresponding to the optical black-detecting portion 25 for the vertical blanking interval of the output signal of said image pick-up section 1, as shown in Fig. 6A, within said signal interval $TV_D$ for clamp pulses supplied during this interval. The clamp pulse output as shown in Fig. 6B may be generated from the clamp pulse generator 18 in the above-mentioned embodiment.

## Claims

1. A clamp circuit for use in a video camera having an image pick-up device (1), said image pick-up device (1) having an optical black-detecting portion (4) provided in an ineffective picture area corresponding to the horizontal blanking interval ($TH_{BLK}$) of the output signal of said image pick-up device (1), said clamp circuit (11—17) receiving, in use, said output signal from said image pick-up device (1), and comprising

a clamp switch (16) on-off operated at a horizontal scanning frequency;

a clamp voltage source (17) connected to said clamp switch (16), a part of said signal corresponding to said optical black-detecting portion (4) being clamped to the voltage supplied by said clamp voltage source (17); and

clamp pulse generating means (18) for generating a train of clamp pulses, having a shorter duration than the signal interval (TH$_o$) corresponding to the optical black level of the image pick-up outputs for controlling said clamp switch, characterised in that the pulse width (W$_1$) of at least one of said clamp pulses supplied immediately after the vertical blanking interval (TV$_{BLK}$) is greater than that of the other (W$_2$) clamp pulses.

2. A clamp circuit according to claim 1, wherein said pulse width of said clamp pulse (W$_1$) supplied immediately after the vertical blanking interval (TV$_{BLK}$) is within the horizontal blanking interval.

3. A clamp circuit according to claim 2, wherein said image pick-up device (1) is a solid-state image sensor.

4. A clamp circuit according to claim 1, 2 or 3 wherein said image pick-up device (1) further has an optical black-detecting portion (25) provided in an ineffective picture area corresponding to the vertical blanking interval (TV$_{BLK}$) of the output signal of said image pick-up device (1).

5. A clamp circuit according to claim 4, wherein the pulse width of clamp pulses (W$_3$) during the vertical blanking interval (TV$_{BLK}$) is greater than that of the clamp pulse (W$_2$) supplied immediately after the vertical blanking interval (TV$_{BLK}$).

6. A clamp circuit according to claim 5, wherein the pulse width of the clamp pulses (W$_3$) supplied during the vertical blanking interval (TV$_{BLK}$) is substantially equal to the horizontal trace interval.

7. A video camera incorporating a clamp circuit according to any one of the preceding claims.

**Patentansprüche**

1. Klemmschaltung für eine Videokamera mit einer Abbildungsanordnung (1), wobei die Abbildungsanordnung (1) einen optischen Schwarz-Erfassungsteil (4) hat, der in einem unwirksamen Bildbereich vorgesehen ist, welcher mit der Horizontalaustastlücke (TH$_{BLK}$) des Ausgangssignals der Abbildungsanordnung korrespondiert, und wobei die Klemmschaltung (11—17) im Betrieb das Ausgangssiganl aus der Abbildungsanordnung (1) empfängt, mit

einem Klemmschalter (16), der bei einer Horizontalabtastfrequenz ein- und ausgeschaltet wird,

einer Klemmspannungsquelle (17), die mit dem Klemmschalter (16) verbunden ist, wobei ein Teil des Signals, der mit dem optischen Schwarz-Erfassungsteil (4) korrespondiert, an die Spannung gebunden wird, die von der Klemmspannungsquelle (17) zugeführt wird, und

einem Klemmimpulserzeugungsmittel (18) zum Erzeugen einer Reihe von Klemmimpulsen, die eine kürzere Dauer als das Signalintervall (TH$_D$) haben, das mit dem optischen Schwarzpegel der Abbildungsanordungs-Ausgangssignale korrespondiert, zum Steuern des Klemmschalters, dadurch gekennzeichnet, daß die Impulsbreite (W$_1$) zumindest eines der Klemmimpulse, die unmittelbar nach der Vertikalaustastlücke (TV$_{BLK}$) zugeführt werden, größer als die Impulsbreite (W$_2$) der anderen Klemmimpulse ist.

2. Klemmschaltung nach Anspruch 1, bei der die Impulsbreite des Klemmimpulses (W$_1$), der unmittelbar nach der Vertikalaustastlücke (TV$_{BLK}$) zugeführt wird, innerhalb der Horizontalaustastlücke liegt.

3. Klemmschaltung nach Anspruch 2, bei der die Abbildungsanordnung (1) ein Festkörper-Bildsensor ist.

4. Klemmschaltung nach Anspruch 1, 2, oder 3, bei der die Abbildungsanordnung (1) desweiteren einen optischen Schwarz-Erfassungsteil (25) hat, der in einem unwirksamen Bildereich vorgesehen ist, welcher mit der Vertikalaustastlücke (TV$_{BLK}$) des Ausgangssignals der Abbildungsanordnung (1) korrespondiert.

5. Klemmschaltung nach Anspruch 4, bei der die Impulsbreite von Klemmimpulsen (W$_3$) während der Vertikalaustastlücke (TV$_{BLK}$) größer als diejenige der Klemmimpulse (W$_2$) ist, die unmittelbar nach der Vertikalaustastlücke (TV$_{BLK}$) zugeführt werden.

6. Klemmschaltung nach Anspruch 5, bei der die Impulsbreite der Klemmimpulse (W$_3$), die während der Vertikalaustastlücke (TV$_{BLK}$) zugeführt werden, im wesentlichen gleich dem Horizontalabtastinterval ist.

7. Videokamera, die eine Klemmschaltung nach einem der vorhergehenden Ansprüche enthält.

**Revendications**

1. Circuit d'écrêtage destiné à être utilisé avec une caméra vidéo ayant un dispositif (1) capteur d'image, ce dispositif (1) ayant une partie (4) de détection optique de noir ayant une zone externe d'image correspondant à l'intervalle de suppression horizontale (TH$_{BLK}$) du signal de sortie du dispositif capteur d'image (1), le circuit d'écrêtage (11—17) recevant, pendant le fonctionnement, le signal de sortie du dispositif capteur d'image (1), et comprenant

un commutateur d'écrêtage (16) commandé par tout ou rien à une fréquence de balayage horizontal,

une source (17) de tension d'écrêtage reliée au commutateur (16) d'écrêtage, une partie du signal correspondant à la partie (4) de détection optique de noir étant verrouillée sur la tension transmise par la source (17) de tension d'écrêtage, et

un dispostif (18) destiné à créer un train d'impulsions d'érêtage ayant une durée inférieure à l'intervalle (TH$_0$) du signal que correspond au niveau optique de noir des signaux de sortie du capteur d'image de manière que le commutateur d'écrêtage soit commandé, caractérisé en ce que la largeur (W$_1$) de l'une au moins des impulsions d'écrêtage transmises juste après l'intervalle de suppresion verticale (TV$_{BLK}$) est supérieure à la largeur (W$_2$) des autres impulsions d'écrêtage.

2. Circuit d'écrêtage selon la revendication 1, dans lequel la largeur des impulsions d'écrêtage ($W_1$) transmises juste après l'intervalle de suppression verticale ($TV_{BLK}$) est comprise dans l'intervalle de suppression horizontale.

3. Circuit d'écrêtage selon la revendication 2, dans lequel le dispositif capteur d'image (1) est un capteur d'image à semi-conducteur.

4. Circuit d'écrêtage selon l'une quelconque des revendications 1 à 3, dans lequel le dispositif capteur d'image (1) a en outre une partie (25) de détection optique de noir formée dans une zone externe d'image correspondant à l'intervalle vertical de suppression ($TV_{BLK}$) du signal de sortie du dispostif capteur d'image (1).

5. Circuit d'écrêtage selon la revendication 4, dans lequel la largeur des impulsions d'écrêtage ($W_3$) pendant l'intervalle de suppression verticale ($TV_{BLK}$) est supérieur à celle des impulsions d'étrêtage ($W_2$) transmises juste après l'intervalle de suppression verticale ($TV_{BLK}$).

6. Circuit d'écrêtage selon la revendication 5, dans lequel la largeur des impulsions d'écrêtage ($W_3$) transmises pendant l'intervalle de suppression verticale ($TV_{BLK}$) est pratiquement égale à l'intervalle de retour horizontal.

7. Caméro vidéo comprenant un circuit d'écrêtage selon l'une quelconque des revendications précédentes.

# FIG.1

# FIG.2

# FIG.3

IMAGE PICK UP DEVICE — 1

SAMPLE HOLD CIRCUIT — 11

LOW INPUT IMPEDANCE CIRCUIT — 12

13

HIGH INPUT IMPEDANCE CIRCUIT — 14

15

CLAMP PULSE GENERATOR — 18

16

17

# FIG.4

VIDEO OUTPUT SIGNAL

A

B

$W_2$

$W_2$

$W_1$

$W_1$

$TH_D$

$TH_{SH}$

$TH_D$

$TH_{SH}$

CLAMP PULSE

$TH_D$

$TH_{SH}$

$TH_D$

$TH_{SH}$

$TH_D$

$TH_{BLK}$

$TH_{BLK}$

$TH_D$

$TH_{BLK}$

$TH_{BLK}$

H

$TV_{BLK}$

H

$T_{nH}$

2

FIG.5

FIG.6

VIDEO OUTPUT SIGNAL

A

B

CLAMP PULSE

$W_2$

$W_2$

$W_3$

$W_2$

$W_2$

$W_1$

$TH_D$

$TH_{SH}$

$TH_D$

$TH_{SH}$

$TH_{BLK}$

$TH_{BLK}$

$TH_{BLK}$

$TH_{BLK}$

$TH_{BLK}$

H

$TV_D$

$TV_{BLK}$

$T_{DH}$